# EUROPEAN PATENT SPECIFICATION

(11) **EP 0 184 341 B1**
(45) Date of publication and mention of the grant of the patent: **26.01.1994**
(21) Application number: 85308217.0
(22) Date of filing: 12.11.1985
(51) Int. Cl.: G02F 1/133, G09G 3/36

(54) **Liquid crystal display panel and manufacturing method thereof**
Flüssigkristallanzeigeschirm und Verfahren zu seiner Herstellung
Ecran d'affichage à cristal liquide et sa méthode de fabrication

(30) Priority: 12.11.1984 JP 238986/84; 26.12.1984 JP 277414/84
(43) Date of publication of application: 11.06.1986
(73) Proprietor: SEMICONDUCTOR ENERGY LABORATORY CO., LTD., Setagaya-ku Tokyo 157 (JP)
(72) Inventor: Yamazaki, Shunpei Semiconductor Energy Lab.Co.Ltd, Tokyo (JP)
(74) Representative: Colgan, Stephen James

(56) References cited:
- EP-A- 0 070 598
- EP-A- 0 126 914
- EP-A- 0 158 367
- US-A- 4 413 883
- PATENT ABSTRACTS OF JAPAN, unexamined applications, field P, vol. 10, no. 7, January 11, 1986 THE PATENT OFFICE JAPANESE GOVERNMENT page 162 P 149

## Description

### BACKGROUND OF THE INVENTION

### Field of the Invention

The present invention relates to a liquid crystal display panel which employs liquid crystal pixel elements each of which has a nonlinear element having a diode characteristic and a liquid crystal element. The invention also pertains to methods for the manufacture of the liquid crystal display panel.

### Description of the Prior Art

Heretofore there has been proposed a display panel which employs m x n (where n ≧ 1 and m ≧ 1) liquid crystal pixel elements M₁₁ to M₁ₙ, M₂₁ to M₂ₙ, ... and Mₘ₁ to Mₘₙ. The liquid crystal pixel element Mᵢⱼ (where i = 1, 2 ... n, j= 1, 2 ... n) has a nonlinear element Uᵢⱼ having a diode characteristic and a liquid crystal element Lᵢⱼ.

In this display panel, the liquid crystal pixel element Mᵢⱼ is connected to a row conductive layer Fᵢ and a column conductive layer Hⱼ at their intersection.

With such a display panel, an image display can be provided by driving the liquid crystal pixel elements M₁₁ to Mₘₙ using the row conductive layers Fᵢ to Fₘ and the column conductive layers H₁ to Hₙ.

Examples of such devices are described in U.S. Patent No. 4413883 and European application EP-A-0070598.

However, the conventional type of display panel is complex in the structure of the non linear element Uᵢⱼ, in the structure of the liquid crystal element Lᵢⱼ and in the structure for connecting the liquid crystal pixel element Mᵢⱼ to the row conductive layer Fᵢ and the column conductive layer Hⱼ.

On this account, the prior art liquid crystal display panel is difficult to manufacture and expensive.

Furthermore, it is difficult to arrange m x n liquid crystal pixel elements M₁₁ to Mₘₙ in an (m x n) matrix form with a high density, so that resolution of the image display is relatively low.

### Summary of the invention

It is therefore an object of the present invention to provide a novel liquid crystal display panel which employs liquid crystal pixel elements each of which has a liquid crystal element and a non linear element having a diode characteristic and connected in series with the non linear element.

Another object of the present invention is to provide novel methods for the manufacture of such a liquid crystal display panel.

According to a first aspect, the invention provides a liquid crystal pixel display comprising: first and second substrate members disposed opposite at a predetermined distance in substantially parallel relation to each other, and liquid crystal filled between the first and second substrate members,
the first substrate member including a first substrate, m stripe-like row electrodes F₁, F₂... Fₘ arranged on the interior surface of said first substrate, each row electrode having a width w, and n display electrodes Cᵢⱼ (where j = 1, 2... n) coupled to each row electrode Fᵢ (where i = 1,2... m) through a respective non-linear element Uᵢⱼ having a diode characteristic;
the second substrate member including a second substrate and a plurality of n x q, where q is an integer equal to or greater than 1, stripe-like conductive layers H₁₁, H₁₂ ... H_{1q}; H₂₁ ... H₂₂ ... H_{2q}; ... and Hₙ₁, Hₙ₂ ... H_{nq} sequentially arranged on the interior surface of said second substrate in the row direction and extending in the column direction, the conductive layers Hⱼ₁ to H_{jq} being opposite the display electrodes C₁ⱼ to Cₘⱼ;
characterised in that each non-linear element Uᵢⱼ is a laminate Aᵢⱼ of a first layer Qᵢⱼ arranged on a portion Dᵢⱼ of the respective row electrode Fᵢ, each layer Qᵢⱼ being arranged in the row direction and having substantially the same width w as the row electrode Fᵢ, and a second conductive layer Eᵢ formed on the layer Qᵢⱼ and having substantially the same width w as the layer Qᵢⱼ, the two side faces of the laminate Aᵢⱼ extending in the row direction being covered with insulating material (Kᵢⱼ, Kᵢⱼ'; Kᵢ), and the respective display electrode Cᵢⱼ has substantially the same width as the length of the laminate and extends in a column direction over the laminate Aᵢⱼ and onto the insulating material.

In preferred embodiments of the invention, the liquid crystal display panel comprises (a) first and second substrate members disposed opposite at a predetermined distance in substantially parallel relation to each other and (b) liquid crystal filled between the first and second substrate members.

The first substrate member comprises (a) a first substrate having an insulating surface, (b) a plurality m of stripe-like conductive layers F₁, F₂ F₃ ... Fₘ arranged on the first substrate in the column direction and extending in the row direction, (c) a plurality n of layers Qᵢ₁ to Qᵢₙ arranged on the conductive layer Fᵢ (where i = 1, 2 ... m) in the row direction and having substantially the same width as the later, (d) a conductive layer Eᵢⱼ being formed on the layer Qᵢⱼ (where j = 1, 2 ... m) and having the same width and length as the later, (e) a portion Dᵢⱼ of the conductive layer Fᵢ underlying the layer Qᵢⱼ, the layer Qᵢⱼ and the conductive layer Eᵢⱼ constituting a laminate member Aᵢⱼ, (f) insulating layers Kᵢⱼ and Kᵢⱼ' each formed over the entire areas of side faces of the laminate member Aᵢⱼ (or (f)' a insulating layers Kᵢ formed on the first substrate and extending between the laminate member Aᵢ₁ to Aᵢₙ and A₍ᵢ₊₁₎₁ to A₍ᵢ₊₁₎ₙ) and (g) a conductive layer Cᵢⱼ formed on the first substrate and corresponding to the laminate member Aᵢⱼ, the conductive layer Cᵢⱼ having substantially the same width as the length of the laminate member Aᵢⱼ and extending on the side face of the insulating layer Kᵢⱼ and onto the insulating layer Kᵢⱼ, the laminate member Aᵢⱼ and the insulating layer Kᵢⱼ', and the both side faces defining the width of the conductive layer Cᵢⱼ being substantially in agreement with the both side faces defining the length of the laminate member Aᵢⱼ (or (g)' a conductive layer Cᵢⱼ formed on the insulating layer Kᵢ and corresponding to the laminate member Aᵢⱼ, the conductive layer Cᵢⱼ having substantially the same width as the length of the laminate member Aᵢⱼ and extending onto the laminate member Aᵢⱼ, and the both side faces defining the width of the conductive layer Cᵢⱼ being substantially in agreement with the both side faces defining the length of the laminate member Aᵢⱼ).

The second substrate member comprises (a) a second substrate having an insulating surface, and (b) a plurality n x q (where q is an integer equal to or greater than 1) of stripe-like conductive layers H₁₁, H₁₂ ... H_{1q}; H₂₁, H₂₂ ... H_{2q}; ... and Hₙ₁, Hₙ₂ Hₙ₃ ... H_{nq} sequentially arranged on the second substrate in the row direction and extending in the column direction, the conductive layers Hⱼ₁ to H_{jq} being opposite the conductive layers C₁ⱼ to Cₘⱼ.

The laminate member Aᵢⱼ forms a nonlinear element Uᵢⱼ. The conductive layer Hⱼᵣ (where r = 1, 2, ... q), a portion Bᵢⱼᵣ of the conductive layer Cᵢⱼ confronting the conductive layer Hⱼᵣ and the portion of the liquid crystal filled between the conductive layer Hⱼᵣ and the portion Bᵢⱼᵣ forms a liquid crystal element Lᵢⱼᵣ.

According to such a liquid crystal display panel of the present invention, the liquid crystal element Lᵢⱼᵣ can be driven by applying a driving signal to the liquid crystal display element Mᵢⱼᵣ via the row conductive layer Fᵢ and the column conductive layer Hⱼᵣ. Accordingly, the liquid crystal display panel provides an image display.

Since the liquid crystal element Lᵢⱼᵣ is formed by the conductive layer Hⱼᵣ, the portion Bᵢⱼᵣ of the conductive layer Cᵢⱼ facing the conductive layer Hⱼᵣ and the portion of the liquid crystal between the conductive layer Hⱼᵣ and the portion Bᵢⱼᵣ, as mentioned above, the liquid crystal element Lᵢⱼᵣ is simple in structure.

Furthermore, the nonlinear element Uᵢⱼ is formed by the aforementioned laminate member Aᵢⱼ, and hence is simple in construction.

The liquid crystal display panel of the present invention is simple-structured in that the liquid crystal display element Lᵢⱼᵣ and the nonlinear element Uᵢⱼ are interconnected in series via the conductive layer Cᵢⱼ to constitute the liquid crystal display device Mᵢⱼᵣ and in that the liquid crystal display device Mᵢⱼᵣ is connected at one side to the row conductive layer Fᵢ forming the other electrode of the nonlinear element Uᵢⱼ and at the other side to the column conductive layer Hⱼᵣ forming the other electrode of the liquid display element Lᵢⱼᵣ.

Accordingly, the liquid crystal display panel of the present invention is far simpler in structure than is conventional, in consequence of which m x (m x q) display crystal elements M₁₁₁ to M_{mnq} can be arranged in an m x (n x q) matrix form with a high density, ensuring to provide an image display with high resolution.

Moreover, according to the present invention, the liquid crystal display panel which has the aforesaid excellent feature can be produced by a manufacturing method of the present invention which includes a step of (A) preparing a first substrate member, (B) preparing a second substrate member, (C) turning the second substrate member upside down and disposing the first and second substrate members in opposing and substantially parallel relation to each other and (D) filling liquid crystal in the gap defined by the first and second substrate members.

The step of preparing a first substrate member includes the steps of a) forming, on a first substrate, a laminate member A composed of a conductive layer F, a layer Q and a conductive layer E laminated in this order; (b) patterning the laminate member A into a first plurality of m stripe-like laminate members A₁ to Aₘ sequentially arranged in the column direction and extending in the row direction; ( c ) depositing an insulating layer K over the entire area of the first substrate to cover the laminate members A₁ to Aₘ; (d) selectively etching away the insulating layer K to form insulating layers Kᵢ (and Kᵢ') on both sides of the laminate member Aᵢ (where i = 1, 2 ... m) defining the width of the laminate members Aᵢ; (e) forming a conductive layer C over the entire area of the first substrate to cover the laminate members A₁ to Aₘ and the insulating layers K₁ to Kₘ (and K₁' to Kₘ'); and (f) patterning the conductive layer C, the second conductive layers E₁ to Eₘ and the layers Q₁ to Qₘ to form display electrodes Cᵢ₁ to Cᵢₙ extending over the laminate member Aᵢ and onto the insulating layer Kᵢ and to form from each laminate member Aᵢ a plurality of n separate laminate members Aᵢⱼ (for j = 1 to n) each composed of a conductive layer Eᵢⱼ, a layer Qᵢⱼ and a portion Dᵢⱼ of the row electrode Fᵢ underlying the layer Qᵢⱼ.

The step of preparing a second substrate member includes the steps of forming, on a second substrate having an insulating surface, a plurality of n x q, where q is an integer equal to or greater than 1, conductive layers H₁₁, H₁₂ ... H_{1q}; H₂₁, H₂₂ ... H_{2q}; ... and Hₙ₁, Hₙ₂ ... H_{nq} sequentially arranged in the row direction and extending in the column direction, the conductive layers Hⱼ₁, Hⱼ₂, ... and H_{iq} corresponding to the display electrodes C₁ⱼ, C₂ⱼ, ... and Cₘⱼ of the first substrate member.

The manufacturing method of the present invention requires only three masks for the fabrication of the liquid crystal display, that is, one for the formation of the laminate member A₁ to Aₘ, one for the formation of the conductive layers C₁₁ to Cₘₙ and the laminate members A₁₁ to Aₘₙ and one for the formation of the conductive layers H₁₁ ∿ H₁ᵣ to Hₙ₁ ∿ Hₙᵣ.

Accordingly, the liquid crystal display panel having the aforesaid advantages can easily be manufactured at low cost.

In the preferred embodiments of the invention, the steps (c) to (f) of preparing the first substrate member comprise the steps of: (c) depositing an insulating layer K having a thickness smaller than the laminate members A₁ to Aₘ over the entire area of the first substrate to cover the laminate members A₁ to Aₘ (or (C)' depositing an insulating layer K having a thickness larger than the laminate members A₁ to Aₘ over the entire area of the first substrate to cover the laminate members A₁ to Aₘ), (d) selectively etching away the insulating layer K to form on both sides of the laminate member Aᵢ (where i = 1, 2 ... m) defining the width of the second laminate member Aᵢ (or (d)' selectively etching away the insulating layer K to form an insulating layer Kᵢ extending between the laminate members Aᵢ and A_{(i + 1)} and flush therewith) (e) forming a conductive layer C over the entire area of the first substrate to cover the laminate members A₁ to Aₘ and the insulating layers K₁ to Kₘ and K₁' to Kₘ' (or (e)' forming a conductive layer C over the entire area of the first substrate to cover the laminate members A₁ to Aₘ and the insulating layers K₁ to Kₘ) and (f) patterning the conductive layer C, the second conductive layers E₁ to Eₘ and the layers Q₁ to Qₘ to form display electordes Cᵢ₁ to Cᵢₙ extending from the substrate onto the insulating layer Kᵢ and the laminate member Aᵢ passing on the side face of the insulating layer Kᵢ, layers Qᵢ₁ to Qᵢₙ and conductive layers Eᵢ₁ to Eᵢₙ, a portion Dᵢⱼ of the conductive layer Fᵢ underlying the layer Qᵢⱼ, the layer Qᵢⱼ and the conductive layer Eᵢⱼ constituting the laminate member Aᵢⱼ (or (f)' patterning the conductive layer C, the second conductive layers E₁ to Eₘ and the layers Q₁ to Qₘ to form conductive layers Cᵢ₁ to Cᵢₙ extending from the insulating layer Kᵢ onto the laminate member Aᵢ, layers Qᵢ₁ to Qᵢₙ and conductive layers Eᵢ₁ to Eᵢₙ, a portion Dᵢⱼ of the row electrode Fᵢ underlying the layer Qᵢⱼ, the layer Qᵢⱼ and the conductive layer Eᵢⱼ constituting the laminate member Aᵢⱼ).

Other objects, features and advantages of the present invention will become more fully apparent from the following detailed description taken in conjunction with the accompanying drawings.

### BRIEF DESCRIPTION OF THE DRAWINGS

Fig. 1 is a plan view schematically illustrating an embodiment of the liquid crystal display panel of the present invention;
Figs. 2, 3, 4 and 5 are sectional views respectively taken on the lines II-II, III-III, IV-IV and V-V in Fig. 1;
Fig. 6 is a graph showing the voltage (V)-current(I) characteristics of the nonlinear element used in the liquid crystal display panel of the present invention depicted in Figs. 1 to 5, in comparison with the V-I characteristics of a conventional nonlinear element;
Fig. 7 is a graph showing a part of the V-I characteristics depicted in Fig. 6;
Fig. 8 is an electrical connection diagram of the liquid crystal display panel of the present invention shown in Figs. 1 to 5;

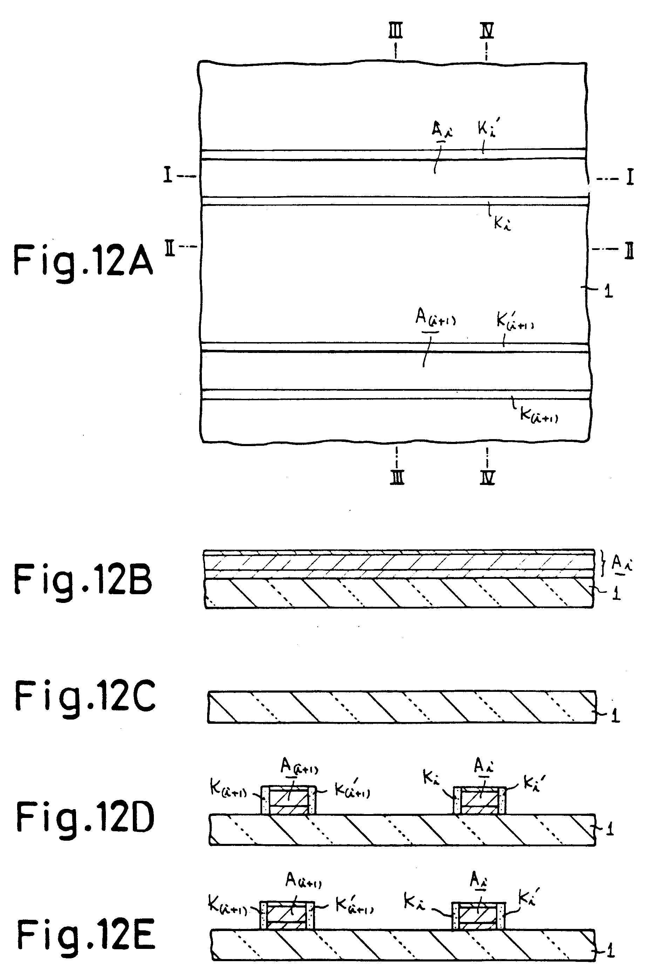

Figs. 9 to 14 are a diagrams for explaining the manufacture of the liquid crystal display panel by the method of the present invention;
Fig. 15 is a plan view illustrating another embodiment of the liquid crystal display panel of the present invention;
Figs. 16, 17 and 18 are sectional views respectively taken on-the lines XVI-XVI, XVII-XVII, XVIII-XVIII and XIX-XIX in Fig. 15;
Fig. 20 is an electrical connection diagram of the liquid crystal display panel of the present invention shown in Figs. 15 to 19; and
Figs. 21 to 26 are diagrams for explaining the manufacture of the liquid crystal display panel shown in Figs. 15 to 19 by the method of the present invention.

### DESCRIPTION OF THE PREFERRED EMBODIMENTS

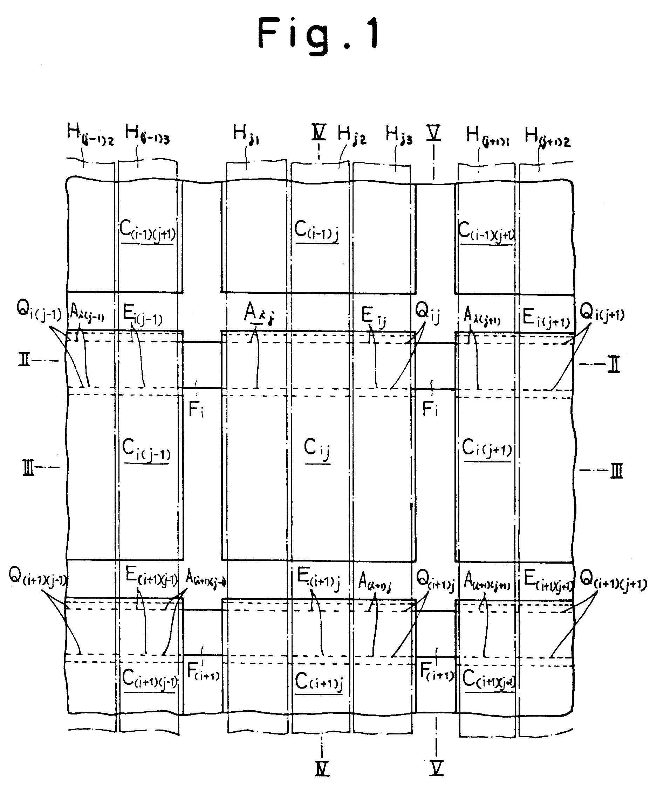

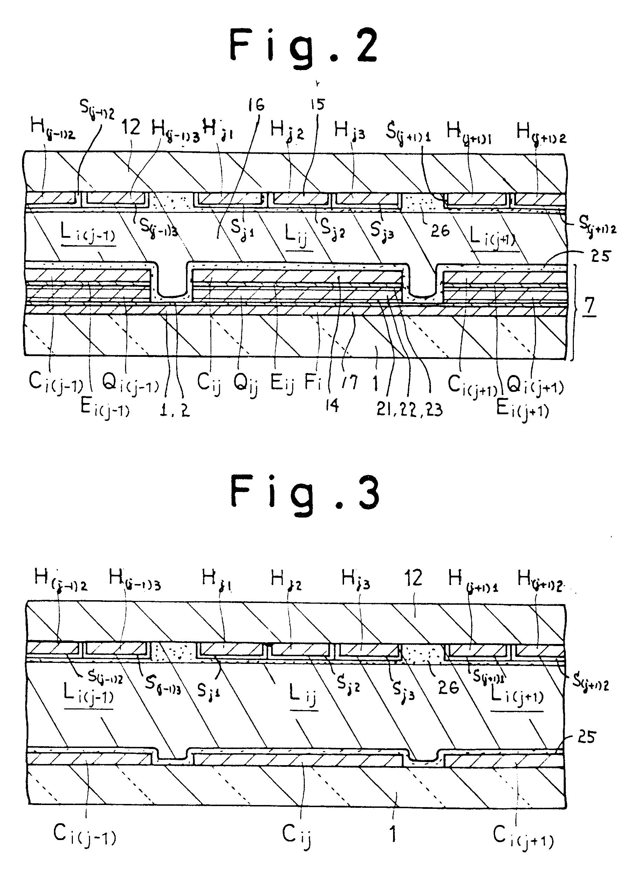

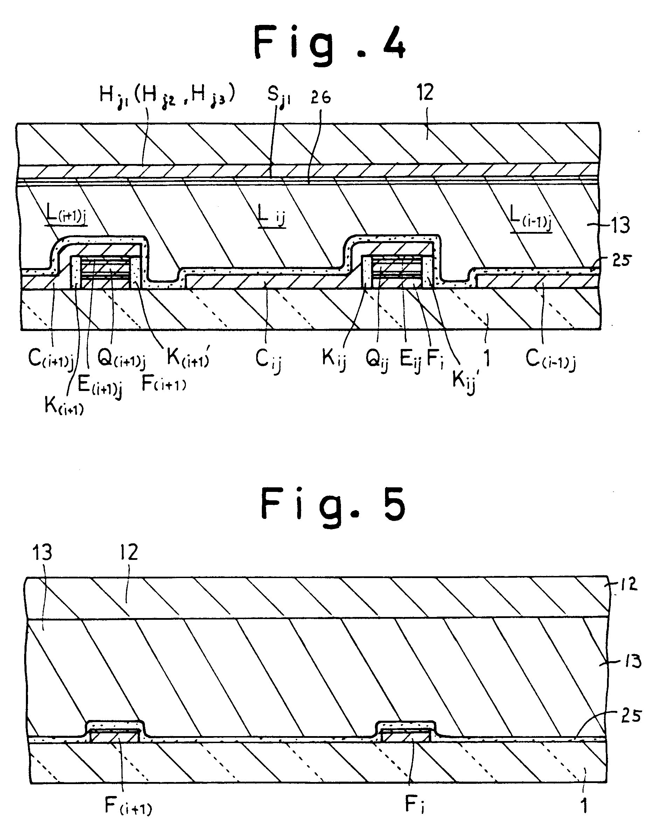

Figs. 1 to 5 illustrate an embodiment of the liquid crystal display panel of the present invention, in which a substrate 1 has an insulating surface. The substrate 1 is formed of, for instance, alkaline free glass.

The substrate 1 has sequentially arranged thereon in column direction a plurality m of row conductive layers F₁, F₂ ... Fₘ. The row conductive layer Fᵢ, also called row electrode, may preferable be composed of a layer 2 formed of, for example, aluminum and a nontransparent layer 3 formed of, for instance chromium.

The row conductive layer Fᵢ has sequentially formed thereon a plurarity of n layers Qᵢ₁, Qᵢ₂ ... Qᵢₙ each of which is formed, for example, non-single-crystal semiconductor. The layers Qᵢ₁, Qᵢ₂ ... Qᵢₙ have same width as the row conductive layer Fᵢ.

The layer Qᵢⱼ (where i=1, 2 ... m and j=1, 2 ... n) may have, for example,an n-i- n type structure composed of an n-type layer, an i-type layer and an n-type layer, an n-i-p (or p⁻)-i-n type structure composed of an n -type layer, an i-type layer, a p(or p⁻)-type layer, an i-type layer and an n-type layer, a p-i-p type structure composed of a p-type layer, an i-type layer and a p-type layer, or a p-i-n(or n⁻)-i-p type structure composed of a p-type layer, an i-type layer, an n(or n⁻)-type layer, an i-type layer and an p-type layer. The layer Qᵢⱼ also may be only a very thin insulating layer which may pass tunnel current. But Figs. 1 to 5 show the case where the layer Qᵢⱼ has the n-i-n type structure. For the sake of brevity, the following description will be made in connection with the case where the layer Qᵢⱼ has the n-i-n type structure.

The layer Qᵢⱼ has an n-type non-single-crystal silicon layer 21 formed on the row conductive layer Fᵢ, an i-type layer 22 of non-single-crystal semconductor formed on the layer 21 and an n-type non-single-crystal silicon layer 23 formed on the layer 22. The layer 22 is formed principally of silicon but contains carbon (C), nitrogen (N) or oxygen (O) in an amount of 1/10 or less relative to the silicon, and hence is formed of non-single-crystal semiconductor expressed by SiₓC₁₋ₓ (where 0 < x < 1).

The layer Qᵢⱼ is covered over the entire area of its top surface with a conductive layer Eᵢⱼ. The conductive layer Eᵢⱼ is formed of, for instance, chromium.

The part of the conductive layer Fᵢ underlying the layer Qᵢⱼ, the layer Qᵢⱼ and the conductive layer Eᵢⱼ make up a layer member Aᵢⱼ.

The layer member Aᵢⱼ are covered over the entire area of its opposite side surfaces with insulating layers Kᵢⱼ and Kᵢⱼ', respectively. The insulating layers Kᵢⱼ and Kᵢⱼ' are formed of, for instance, silicon nitride or silicon oxide and have 0.1 to 0.5 µm in thickness.

The substrate 1 has arranged thereon in a matrix form m x n (where m > 1, and n > 1) conductive layers C₁₁ to C₁ₙ, C₂₁ to C₂ₙ, C₃₁ to C₃ₙ, ... and Cₘ₁ to Cₘₙ, these layers Cᵢⱼ being also called display electrodes.

The conductive layer Cᵢⱼ (where i = 1, 2, ... m and j = 1, 2, ... n) is rectangular in shape and has a relatively large area, for example, 100 µm wide and 150 µm long.

The conductive layer Cᵢⱼ extends on the layer member Aᵢⱼ i.e. the conductive layer Eᵢⱼ and the insulating layer Kᵢⱼ and Kᵢⱼ' through the side surface of the insulating layer Kᵢⱼ and make contact with the conductive layer Eᵢⱼ. The conductive layer Cᵢⱼ has substantially same width as the long of the layer member Aᵢⱼ i.e. the conductive layer Eᵢⱼ and is formed of, for instance, chromium and is nontransparent. In this case, the opposing side surfaces of the conductive layer Cᵢⱼ, which determine the width of the conductive layer Cᵢⱼ are substantially aligned with the opposing side surfaces of the layer member Aᵢⱼ, which determine the long of the layer member Aᵢⱼ.

Furthermore a relatively thin insulation protecting layer 25 is deposited on the substrate 1 to cover the conductive layer C₁₁ to Cₘₙ, the active layers A₁₁ to A₁ₙ, A₂₁ to A₂ₙ ... Aₘ₁ to Aₘₙ, the insulating layer K₁₁ to Kₘₙ and K₁₁' to Kₘₙ' and parts of the row conductive layers F₁, F₂ ... Fₘ which are not covered with the conductive layers C₁₁ to C₁ₙ, C₂₁ to C₂...Cₘ₁ to Cₘₙ.

The conductive layers F₁ to Fₘ, the layer members A₁₁ to Aₘₙ, the insulating layers K₁₁ to Kₘₙ and K₁₁' to Kₘₙ' and the conductive layers C₁₁ to Cₘₙ make up a substrate member 7.

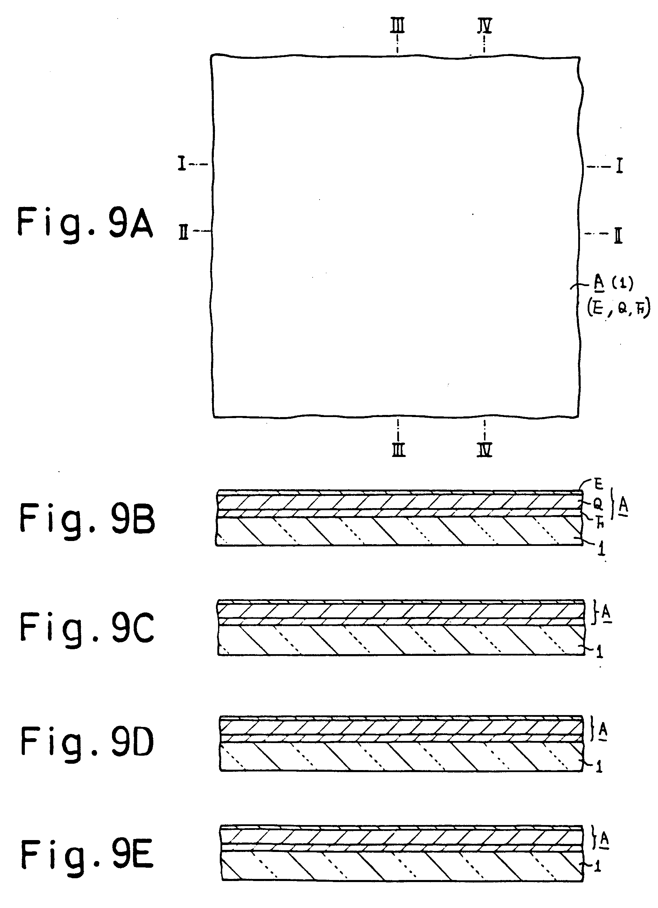

The substrate member 7 is formed, for example, as follows:
A conductive layer F which will ultimately form the row conductive layers F₁ to Fₘ, a layer Q which will ultimately form the layers Q₁₁ to Qₘₙ and a conductive layer E which will ultimately form the conductive layers E₁₁ to Eₘₙ are deposited in that order on the substrate 1, as shown in Figs. 9A to 9E. The conductive layer F, the layer Q and the conductive layer E make up a layer member A which will ultimately form the layer members A₁₁ to Aₘₙ.

The conductive layer F may be formed by a known method, for instance, a sputtering or electron beam evaporation process.

The layer Q also may be formed by a known method, for example, a CVD, plasma CVD or photo CVD method.

In my experiment, the substrate 1 formed thereon the conductive layer F was loaded through a loading and unloading chamber into a first reaction chamber, wherein a glow discharge was produced over the substrate 1 at a high frequency of 13.56 MHz in an atmosphere containing silane SiH₄, phosphine PH₃ and hydrogen, with the substrate temperature held in the range of 200 to 250 °C. As a result of this, an n-type microcrystalline silicon layer, which had a conductivity of 10⁻² to 10² (Ωcm)⁻¹ and contained hydrogen as a recombination center neutralizer, was deposited 300 to 1000 Å thick on the conductive layer F. Next, the substrate 1 was moved from the first reaction chamber into the next second reaction chamber wherein a gas mixture of silane SiₘH₂ₘ₊₂ (where m = 1, 2, 3, ...) (for example, SiH₄) and methyl silane SiHₙ(CH₃)₄₋ₙ (where n = 1, 2, 3) was discharged into a plasma, by which an i-type non-single-crystal silicon layer of SiₓC₁₋ₓ was deposited 0.2 to 1 µm thick on the n-type layer. After this, the substrate 1 was returned from the second reaction chamber to the first reaction chamber, wherein another n-type layer similar to the above n-type layer was deposited by the same method on the i-type non-single-crystal silicon layer, thus obtaining the laminate member Q having the n-i-n type structure.

The conductive layer E may also be formed by a known method, for instance, a sputtering or electron beam evaporation process.

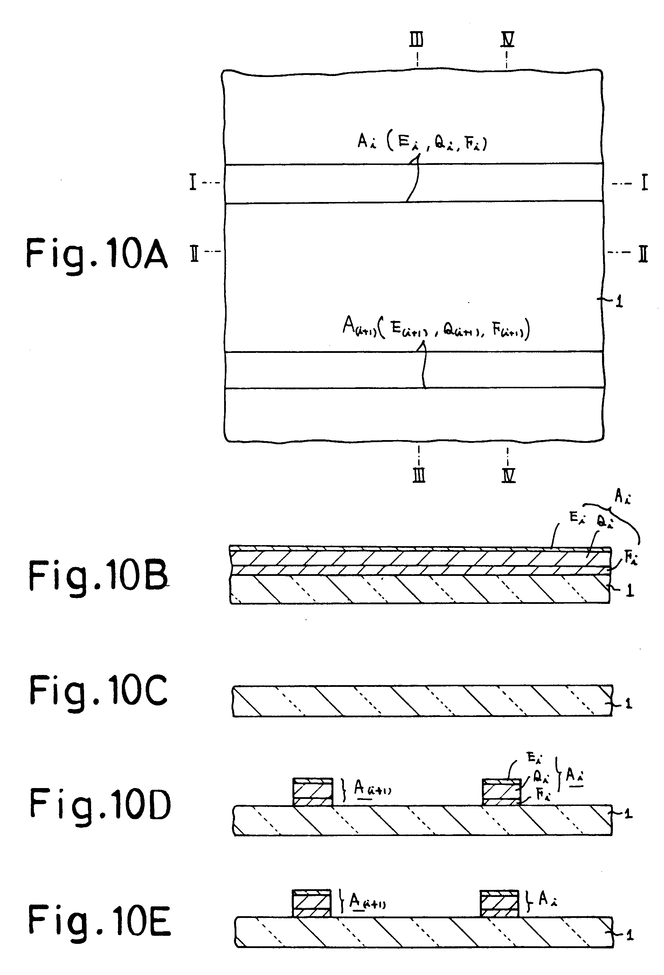

Next, the layer member A is subjected to a known pattern process using a first mask, providing m layer members A₁ to Aₘ of the same pattern as row the conductive layers F₁ to Fₘ, as shown in Figs. 10A to 10E.

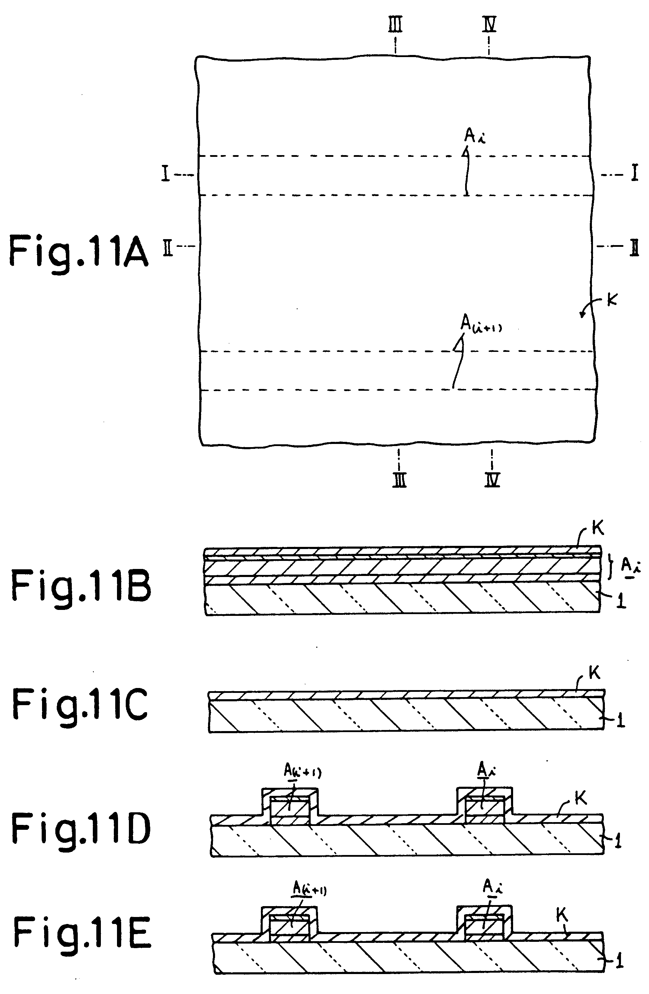

Next, a insulating layer K which will ultimately form the insulating layer K₁₁ to Kₘₙ and K₁₁' to Kₘₙ' and which is relatively thin than the layer member A₁ to Aₘ is deposited by a known method, for example, plasma CVD method on the entire surface of the substrate 1 to cover the active layers A₁ to Aₘ, as shown in Figs. 11A to 11E.

Next, the insulating layer K is selectively etched away by a known method, for example, a plasma etching method to form insulating layers Kᵢ and Kᵢ' on both sides of the laminate member Aᵢ difining the width of the laminate member Aᵢ, as shown in Fisg. 12A to 12E.

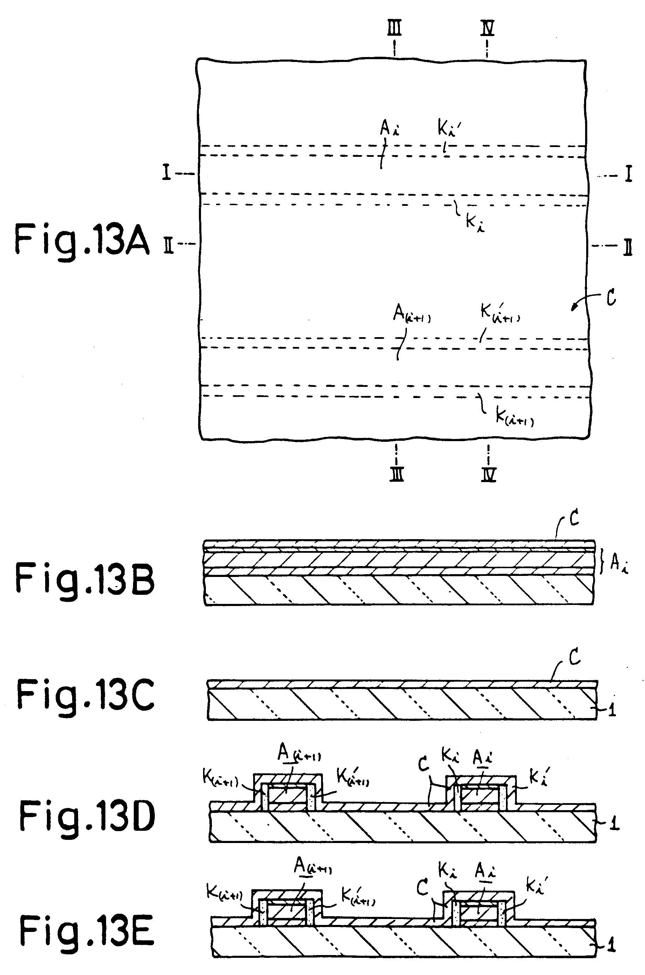

Next, a conductive layer C is diposited on the entire area of the substrate 1 to cover the laminate member A₁ to Aₘ and the insulating layers K₁ to Kₘ and K₁' to Kₘ' as shown in Figs. 13A to 13E.

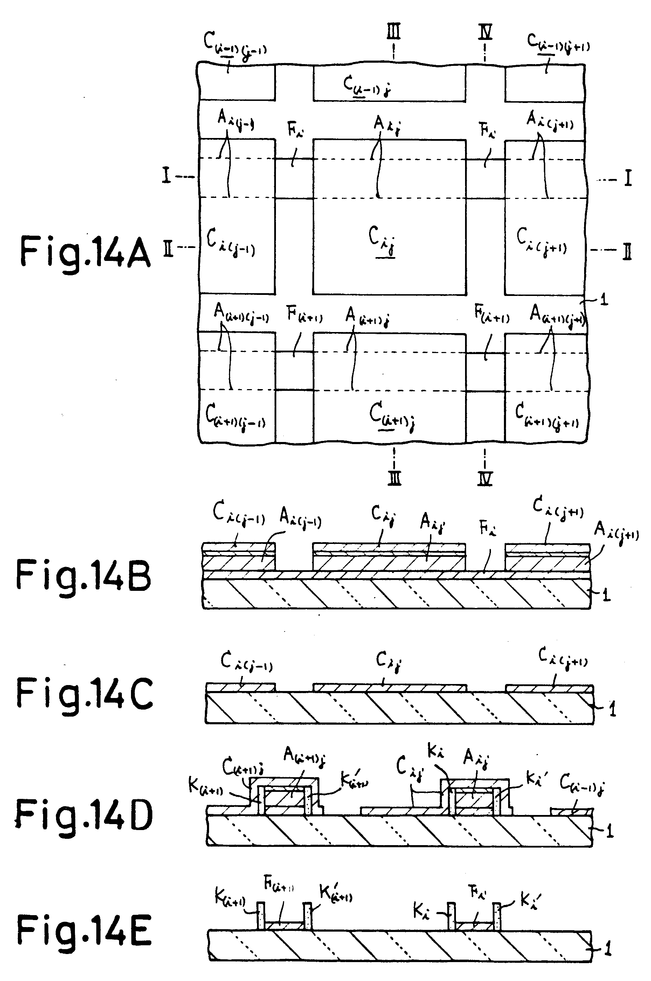

Next, the conductive layer C, the layer Q₁ to Qₘ and the conductive layer E₁ to Eₘ of the layer members A₁ to Aₘ are patterned by a known method using a second mask into the conductive layers C₁₁ to Cₘₙ, the layers Q₁₁ to Qₘₙ and the conductive layers E₁₁ to Eₘₙ as shown in Figs. 14A to 14E. In this case, the conductive layer F₁ to Fₘ are not patterned. The layer Qᵢⱼ, the part of the conductive layer Fᵢ underlying the layer Qᵢⱼ and the conductive layer Eᵢⱼ make up the laminate member Aᵢⱼ.

Next, the insulating layers K₁ to Kₘ and K₁' to Kₘ' are selectively etched away by a known mthod into the insulating layer K₁₁ to Kₘₙ and K₁₁' to Kₘₙ'.

Next, the thin insulation protecting layer 25 is deposited on the entire surface of the substrate 1 to cover the conductive layers C₁₁ to Cₘₙ, the layer members A₁₁ to Aₘₙ, the insulating layers K₁₁ to Kₘₙ and K₁₁' to Kₘₙ' and the part of the conductive layer F₁ to Fₘ which are not covered with the conductive layers C₁₁ to Cₙₘ.

Referring now back to Figs. 1 to 5, another substrate member 11, which is different from the aforementioned substrate member 7 is provided.

The substrate member 11 has, on a substrate 12 corresponding to the substrate 1, a plurality of n x q (where q ≧ 1, in this instance q = 3) sequentially arranged column conductive layers H₁₁, H₁₂ and H₁₃; H₂₁, H₂₂ and H₂₃; ... Hₙ₁, Hₙ₂ and Hₙ₃ which are arranged opposing relation to the conductive layers C₁₁ to Cₘ₁; C₁₂ to Cₘ₂; ... C₁ₙ to Cₘₙ, respectively and extend in the column direction. The column conductive layer Hⱼ₁, Hⱼ₂ and Hⱼ₃ can be obtained by forming a conductive layer through a known method on the substrate 12 and then patterning the conductive layer through a third mask.

The column conductive layers Hⱼ₁, Hⱼ₂ and Hⱼ₃ are covered over entire surfaces thereof with red, green and blue filters Sⱼ₁, Sⱼ₂ and Sⱼ₃, respectively.

Furthermore, a insulation protecting layer 26 formed of, for instance, organic region is deposited on the entire surface of the substrate 12 by a known method, for example, coating to cover the filters S₁₁ to Sₙ₁, S₁₂ to Sₙ₂ and S₁₃ to Sₙ₃.

The substrate member 11 is disposed upside down by a suitable support means (not shown) in opposing relation to the top of the substrate member 7 in parallel thereto. In this instance, the conductive layers C₁ⱼ to Cₘⱼ of the substrate member 7 and the column conductive layers Hⱼ₁, Hⱼ₂ and Hⱼ₃ of the substrate member 11 are held face-to face with each other.

A space defined by the substrate members 7 and 11 is filled with liquid crystal 13.

In the structure described above in conjunction with Figs. 1 through 5, a part 14 of the conductive layer Cᵢⱼ on the substrate 1 and a part 15 of the conductive layer Hⱼᵣ (where r = 1, 2, 3) on the substrate 12, which are face-to-face with each other and a part 16R of the liquid crystal 13 between the part 14 of the conductive layer Cᵢⱼ and the part 15 of the conductive layer Hⱼᵣ constitute a liquid crystal element Lᵢⱼᵣ which employs the parts 14 and 15 as its electrodes Bᵢⱼᵣ and Bᵢⱼᵣ', respectively.

When low voltages are applied across the part 14 serving as electrode Bᵢⱼᵣ of the conductive layer Cᵢⱼ and the part 15 serving as electrode Bᵢⱼᵣ' of the conductive layer Hⱼᵣ; the liquid crystal element Lᵢⱼₑ remain opaque, but when high voltages are applied, it become transparent.

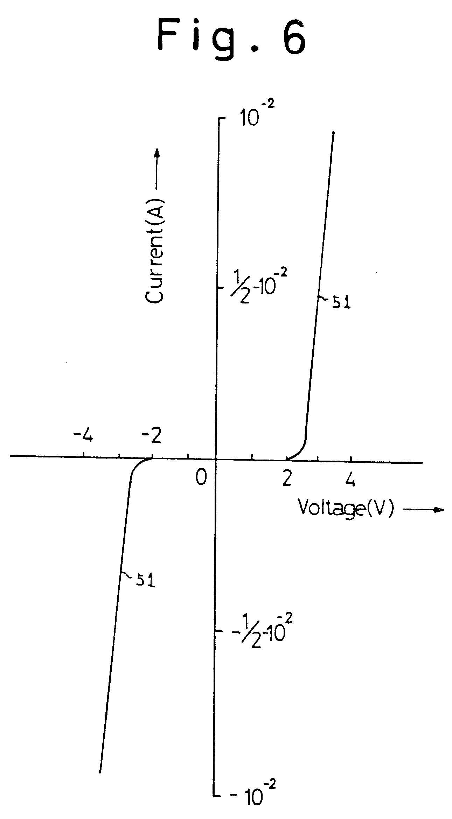

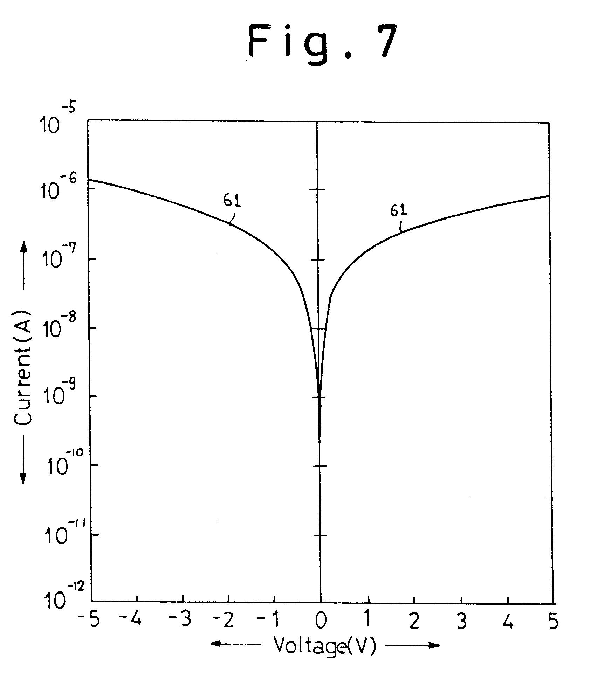

The layer member Aᵢⱼ constitute a nonlinear element Uᵢⱼ which employs the part 17 of the conductive layer Fᵢ underlying the layer Qᵢⱼ and the conductive layer Eᵢⱼ as its electrodes Dᵢⱼ and Dᵢⱼ', respectively. The element Uᵢⱼ presents such a nonlinear voltage(V)-current(A) characteristic curves 51 and 61 as shown in Figs. 6 and 7. The element Uᵢⱼ has an offset voltage which is intermediate between the voltage that makes the liquid crystal element Lᵢⱼᵣ transparent and non transparent, respectively.

The liquid crystal element Lᵢⱼᵣ and the nonlinear element Uᵢⱼ are connected in series with each other, and hence make up a liquid crystal display device Mᵢⱼᵣ.

According to the arrangement described above with respect to Figs. 1 through 5, the electrode Bᵢⱼᵣ of the liquid crystal element Lᵢⱼᵣ and the electrode Dᵢⱼᵣ' of the nonlinear element Uᵢⱼ are common each other. The electrode Bᵢⱼᵣ' of the liquid crystal elements L₁ⱼᵣ of the liquid crystal display devices Mᵢⱼᵣ is connected to the column conductive layer Hⱼᵣ and the electrode Dᵢⱼ of the nonlinear element Uᵢⱼ is connected to the conductive layer Fᵢ. Furthermore, the column conductive layer Hⱼ₁, Hⱼ₂ and Hⱼ₃ are covered with the red, green and blue filters Sⱼ₁, Sⱼ₂ and Sⱼ₃, respectively.

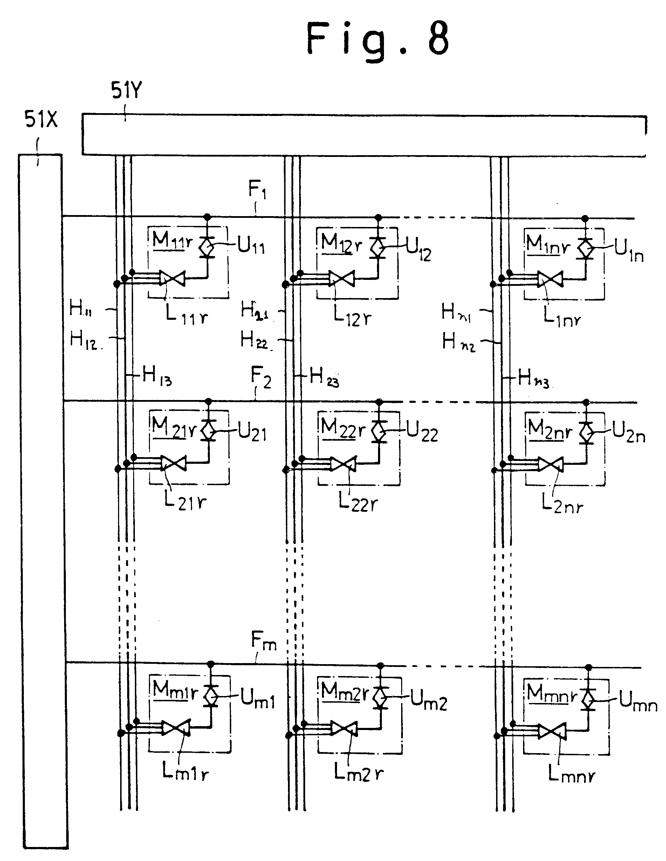

Therefore, according to the arrangement described above in connection with Figs. 1 to 5, since the liquid crystal element Lᵢⱼᵣ can be controlled to be transparent or nontransparent, respectively, by applying, through use of row and column decoders 51X and 51Y, across the liquid crystal display device Mᵢⱼ₁, Mᵢⱼ₂ and Mᵢⱼ₃ via the conductive layers F₁ and Hⱼ₁, Fᵢ and Hⱼ₂, and Fᵢ and Hⱼ₃ red, as shown in Fig. 8, green and blue drive signals a color display can be provided.

Accordingly, the liquid crystal display panel shown in Figs. 1 to 5 can be provided a color image display.

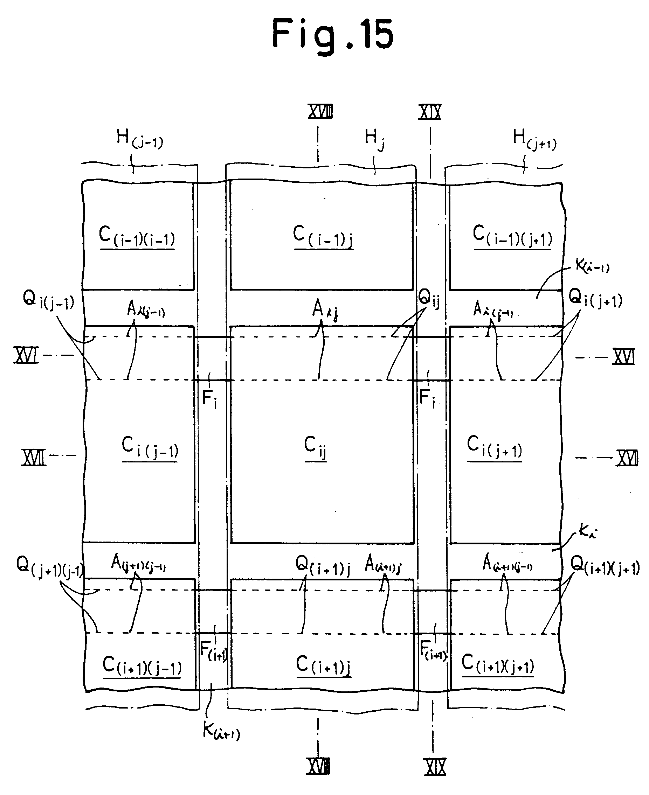

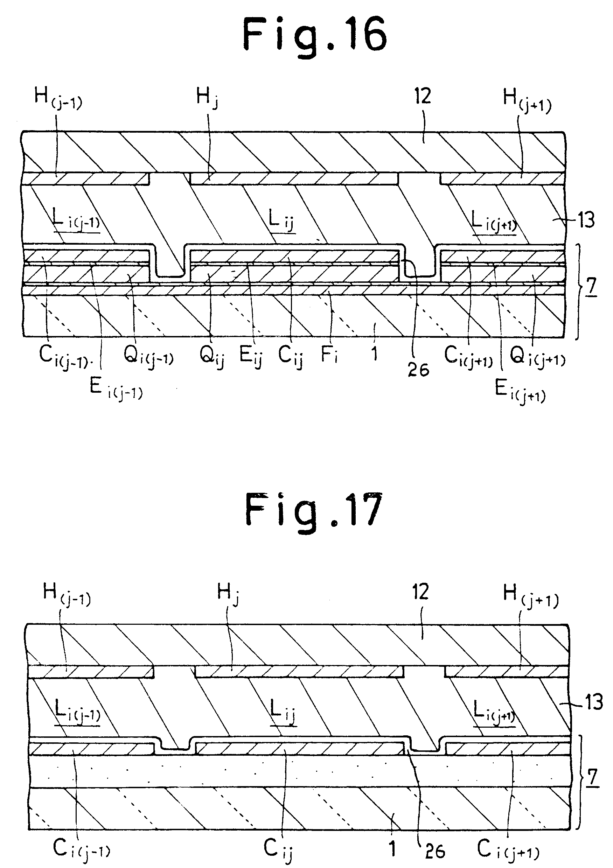

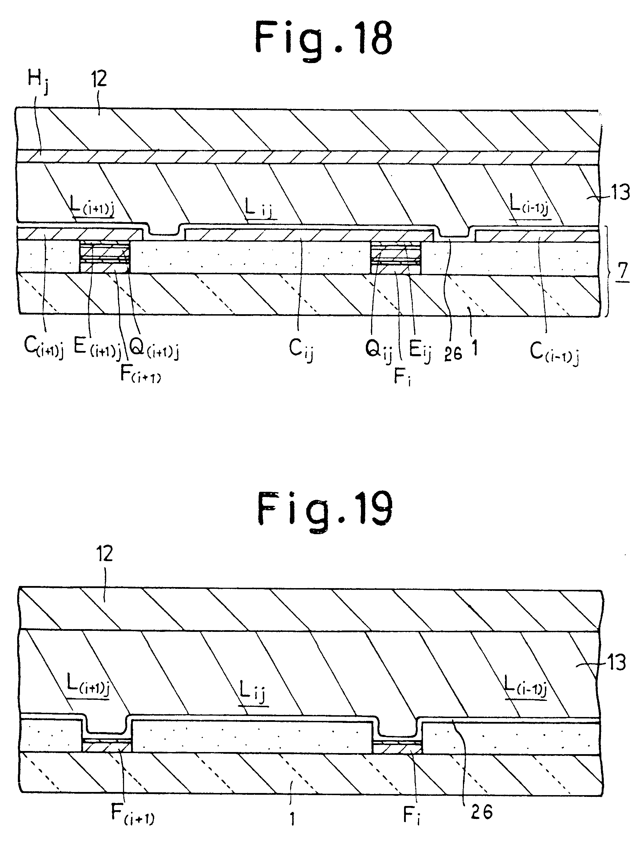

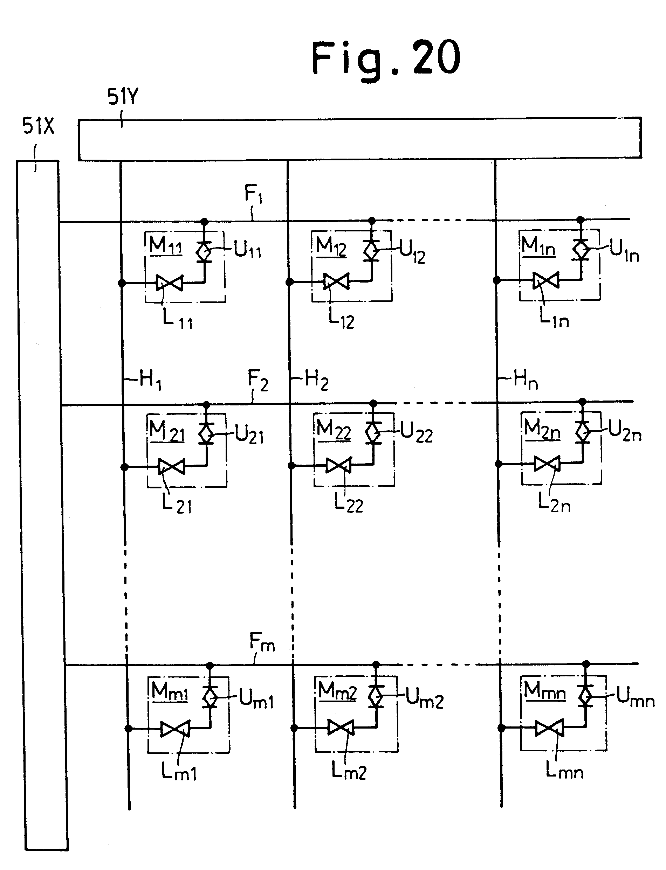

Fig. 15 to 19 illustrate another embodiment of the liquid crystal display panel of the present invention.

In Figs. 15 to 19 like parts corresponding to those in Figs. 1 to 5 are identified by the same reference numerals and no detailed description will be given of them.

The liquid crystal display panel shown in Figs. 15 to 19 has the same construction as depicted in Figs. 1 to 5 except the following points:

The insulating layers Kᵢ₁ to Kᵢₙ and K₍ᵢ₊₁₎₁' to K₍ᵢ₊₁₎ₙ' in Figs. 1 to 5 are substituted with a insulating layer Kᵢ. The insulating layer Kᵢ extends between the laminate members Aᵢ₁ to Aᵢₙ and A₍ᵢ₊₁₎₁ to A₍ᵢ₊₁₎ₙ and substantially flush therewith, therefor the conductive layer Cᵢⱼ is formed on the ensulating layer Kᵢ and extends onto the laminate member Aᵢⱼ and the insulating layer K₍ᵢ₋₁₎.

Further, the column conductive layer Hᵢ₁, Hⱼ₂ and Hⱼ₃ in Figs. 1 to 5 are substituted with a column conductive layer Hⱼ, and therefor the liquid crystal display device Mᵢⱼ₁, Mᵢⱼ₂ and Mᵢⱼ₃ are substituted with a liquid crystal display device Mᵢⱼ.

Furthermore, the filters S₁₁ to Sₙ₁, s₁₂ to Sₙ₂ and S₁₃ to Sₙ₃ are omitted.

According to the arrangement described above with respect to Figs. 1 through 5, the electrode Bᵢⱼᵣ of the liquid crystal element Lᵢⱼ and the electrode Dᵢⱼ' of the nonlinear element Uᵢⱼ are common each other. The electrode Vᵢⱼ' of the liquid crystal elements L₁ⱼ of the liquid crystal display devices Mᵢⱼ is connected to the column conductive layer Hⱼ and the electrode Dᵢⱼ of the nonlinear element Uᵢⱼ is connected to the conductive layer Fᵢ. Therefore, according to the arrangement described above in connection with Figs. 15 to 19, since the liquid crystal element Lᵢⱼ can be controlled to be transparent or nontransparent, respectively, by applying, through use of row and column decoders 51X and 51Y, across the liquid crystal display device Mᵢⱼ, Mᵢⱼ and Mᵢⱼ via the conductive layers Fᵢ and Hⱼ drive signal a monocolor display can be provided.

Accordingly, the liquid crystal display panel shown in Figs. 1 to 5 can be provided a monocolor image display.

The substrate member 7 dipicted in Figs. 15 to 19 can be manufactured, for example, as follows:

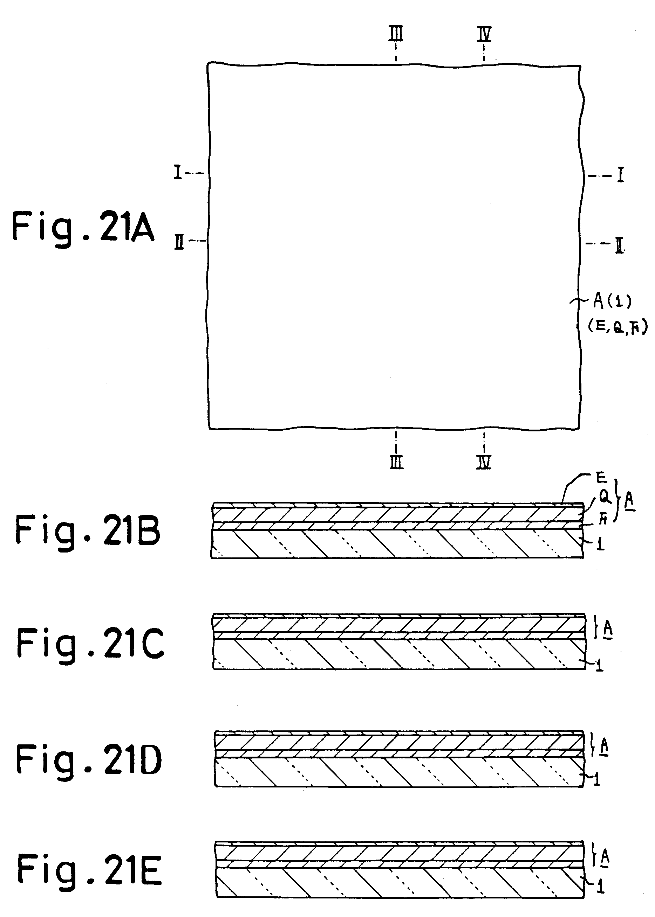

A conductive layer F which will ultimately form the conductive layers F₁ to Fₙ, a layer laminate member which will ultimately form the layer laminate members Q₁₁ to Qₘₙ and a conductive layer E, which will ultimately form the conductive layers E₁₁ to Eₘₙ are deposited in that order on the substrate 1, as shown in Figs. 21A to 21E as in the case with the example shown Figs. 9A to 9E. The conductive layer F, the non-single-crystal semiconductor layer Q and the conductive layer E make up a active layer member A which will ultimately form the active layer member A₁₁ to Aₘₙ as described previously.

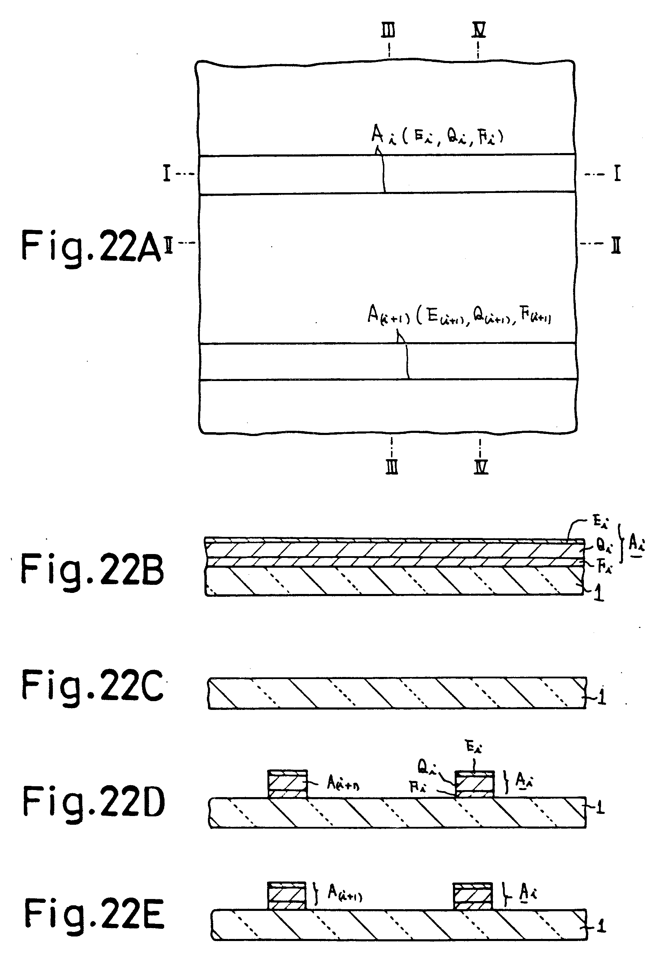

Next, the active layer member A is subjected to a known pattern process using a first mask, providing m layer members A₁ to Aₘ of the same pattern as the conductive layers F₁ to Fₘ, as shown in Figs. 22A to 22E, as is the case with the example shown in Figs. 10A to 10E.

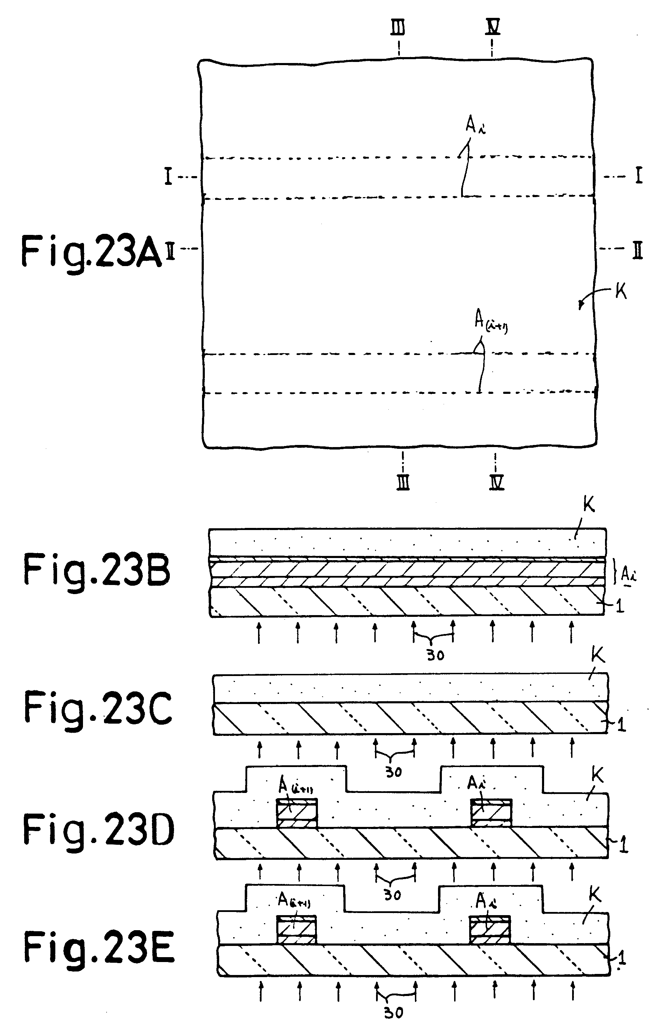

Next, a insulating layer K of photo resist which will ultimately form the insulating layer Kᵢ is deposited by a known method, for example, a plasma CVD method on the entire surface of the substrate 1 to cover the layers A₁ to Aₘ, as shown in Figs. 23A to 23E.

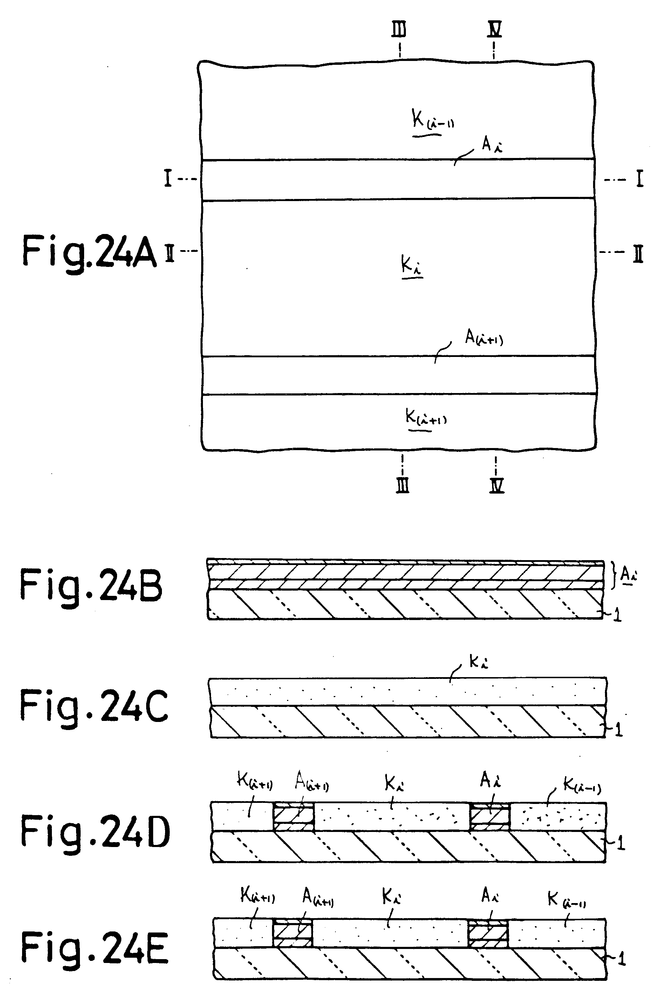

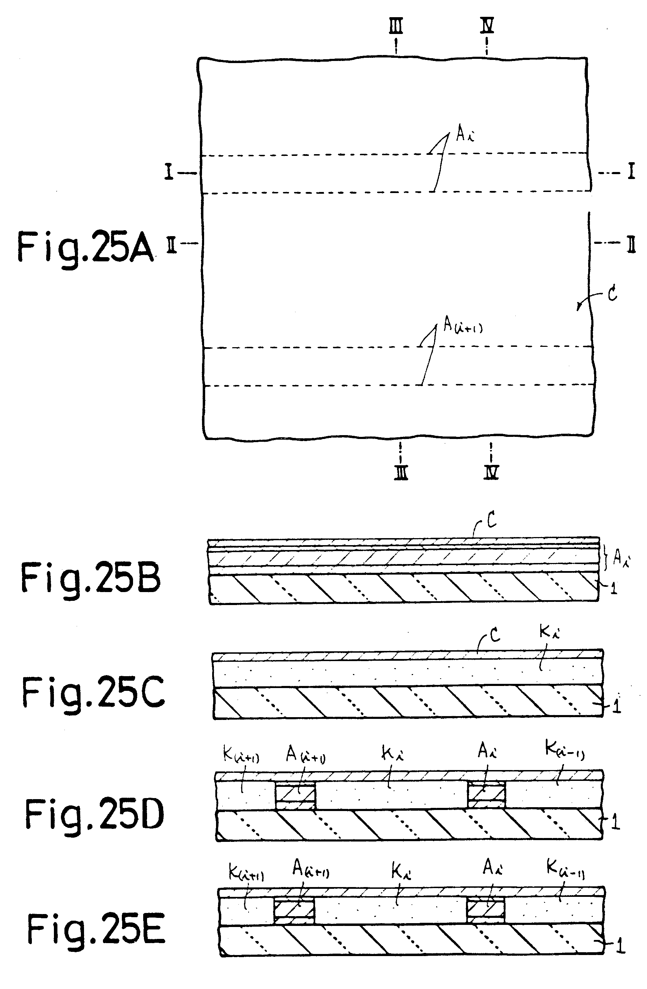

Next, the insulating layer K is irradiated by light 30 without using any mask as shown in Figs. 23A to 23B and then is developed into the insulating layer Kᵢ, as shown in Figs. 25A to 24E.

Next, a conductive layer C is diposited on the entire area of the substrate 1 to cover the laminate member A₁ to Aₘ and the insulating layer K₁ to Kₘ as shown in Figs. 25A to 25E.

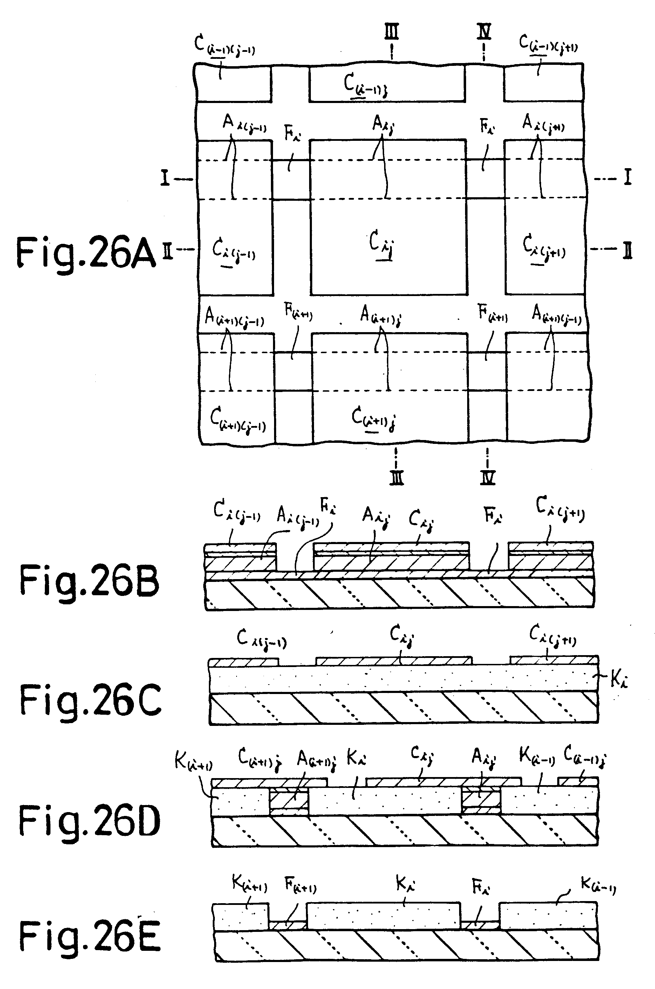

Next, the conductive layer C, the conductive layers E₁ to Eₘ and the layers Q₁ to Qₘ of the layer member A₁ to Aₘ are patterned by a known method using a second mask into the conductive layers C₁₁ to Cₘₙ, the layers Q₁₁ to Qₘₙ and the conductive layers E₁₁ to Eₘₙ of the layer member A₁₁ to Aₘₙ, as shown in Figs. 26A to 26E.

Next, the thin insulating layer 25 is deposited on the entire surface of the substrate 1 to cover the conductive layers C₁₁ to Cₘₙ, the layer members A₁₁ to Aₘₙ, the insulating layers K₁ to Kₘ and the parts of the conductive layers F₁ to Fₘ which are not covered with the conductive layers C₁₁ to Cₘₙ.

It will be apparent that the above embodiment should be construed as merely illustrative of the present invention and should not be construed as limiting the invention specifically thereto and that various modifications and variations may be effected without departing from the scope of the invention as claimed.

## Claims

1. A liquid crystal pixel display comprising: first and second substrate members (7,11) disposed opposite at a predetermined distance in substantially parallel relation to each other, and liquid crystal (13) filled between the first and second substrate members;
the first substrate member (7) including a first substrate (1), m stripe-like row electrodes F₁, F₂... Fₘ arranged on the interior surface of said first substrate, each row electrode having a width w, and n display electrodes Cᵢⱼ, where j = 1, 2... n, coupled to each row electrode Fᵢ, where i = 1,2... m, through a respective non-linear element Uᵢⱼ having a diode characteristic;
the second substrate member (11) including a second substrate (12) and a plurality of n x q, where q is an integer equal to or greater than 1, stripe-like conductive layers H₁₁, H₁₂ ... H_{1q}; H₂₁ ... H₂₂ ... H_{2q}; ... and Hₙ₁, Hₙ₂ ... H_{nq} sequentially arranged on the interior surface of said second substrate (12) in the row direction and extending in the column direction, the conductive layers Hⱼ₁ to H_{jq} being opposite the display electrodes C₁ⱼ to Cₘⱼ;
characterised in that each non-linear element Uᵢⱼ is a laminate Aᵢⱼ of a first layer Qᵢⱼ arranged on a portion Dᵢⱼ of the respective row electrode Fᵢ, each layer Qᵢⱼ being arranged in the row direction and having substantially the same width w as the row electrode Fᵢ, and a second conductive layer Eᵢ formed on the layer Qᵢⱼ and having substantially the same width w as the layer Qᵢⱼ, the two side faces of the laminate Aᵢⱼ extending in the row direction being covered with insulating material (Kᵢⱼ, Kᵢⱼ'; Kᵢ), and the respective display electrode Cᵢⱼ has substantially the same width as the length of the laminate and extends in a column direction over the laminate Aᵢⱼ and onto the insulating material.

2. A display according to claim 1, wherein the insulating material Kᵢ formed on the substrate extends between adjacent laminate members Aᵢ₁ to Aᵢₙ and substantially flush therewith.

3. A display according to claim 1, wherein the insulating material Kᵢⱼ, Kᵢⱼ' substantially covers only the side faces of the laminate Aᵢⱼ.

4. A method for the manufacture of a liquid crystal display panel, comprising:
(A) a step of preparing a first substrate member which includes the steps of:
(a) forming, on a first substrate, a laminate member A composed of a conductive layer F, a layer Q and a conductive layer E laminated in this order;
(b) patterning the laminate member A into a first plurality of m stripe-like laminate members A₁ to Aₘ sequentially arranged in the column direction and extending in the row direction;
(c) depositing an insulating layer K over the entire area of the first substrate to cover the laminate members A₁ to Aₘ;
(d) selectively etching away the insulating layer K to form insulating layers Kᵢ (and Kᵢ') on both sides of the laminate member Aᵢ (where i = 1, 2 ... m) defining the width of the laminate members Aᵢ;
(e) forming a conductive layer C over the entire area of the first substrate to cover the laminate members A₁ to Aₘ and the insulating layers K₁ to Kₘ (and K₁' to Kₘ'); and
(f) patterning the conductive layer C, the second conductive layers E₁ to Eₘ and the layers Q₁ to Qₘ to form display electrodes Cᵢ₁ to Cᵢₙ extending over the laminate member Aᵢ and onto the insulating layer Kᵢ and to form from each laminate member Aᵢ a plurality of n separate laminate members Aᵢⱼ (for j = 1 to n) each composed of a conductive layer Eᵢⱼ, a layer Qᵢⱼ and a portion Dᵢⱼ of the row electrode Fᵢ underlying the layer Qᵢⱼ
(B) a step of preparing a second substrate member, which includes the steps of:
forming, on a second substrate having an insulating surface, a plurality of n x q, where q is an integer equal to or greater than 1, conductive layers H₁₁, H₁₂ ... H_{1q}; H₂₁, H₂₂ ... H_{2q}; ... and Hₙ₁, Hₙ₂ ... H_{nq} sequentially arranged in the row direction and extending in the column direction, the conductive layers Hⱼ₁, Hⱼ₂, ... and H_{iq} corresponding to the display electrodes C₁ⱼ, C₂ⱼ, ... and Cₘⱼ of the first substrate member;
(C) a step of turning the second substrate member upside down and disposing the first and second substrate members in opposing and substantially parallel relation to each other; and
(D) a step of filling liquid crystal in the gap defined by the first and second substrate members.

5. A method according to claim 4, wherein step (d) comprises etching away the insulating layer K leaving portions of said insulating layer extending substantially only along side surfaces of the laminate members and not substantially along the substrate, and wherein step (f) comprises patterning the conductive layer G to form display electrodes Cᵢ₁ to Cᵢₙ extending from the substrate onto the insulating layer Kᵢ and the laminate member Aᵢ and passing on the side face of the insulating layer Kᵢ.

6. A method according to claim 4, wherein step (d) comprises etching away the insulating layer K to form an insulating layer Kᵢ extending between adjacent laminate members A₁ to Aₘ and substantially flush therewith.

## Patentansprüche

1. Flüssigkristallpixelanzeige mit einem ersten und einem zweiten Substratglied (7, 11), die einander gegenüberliegend in einem vorbestimmten Abstand im wesentlichen parallel zueinander angeordnet sind, und mit Flüssigkristall (13), welches zwischen das erste und das zweite Substratglied eingefüllt ist; wobei
das erste Substratglied (7) ein erstes Substrat (1), m streifenähnliche Zeilenelektroden F₁, F₂... Fₘ, die auf der inneren Oberfläche des ersten Substrates angeordnet sind und jeweils eine Breite w aufweisen, und n Anzeigeelektroden Cᵢⱼ mit j = 1, 2 ... n, die mit jeder Zeilenelektrode Fᵢ mit i = 1, 2 ... m durch ein zugeordnetes nicht lineares Element Uᵢⱼ mit einer Diodencharakteristik gekoppelt sind, umfaßt;
das zweite Substratglied (11) ein zweites Substrat (12) und eine Vielzahl von n x q mit q als ganzer Zahl gleich oder größer 1, streifenähnlicher Leiterlagen H₁₁, H₁₂... H_{1q}; H₂₁... H₂₂... H_{2q}; ... und Hₙ₁, Hₙ₂... H_{nq}, die sequentiell bzw. aufeinanderfolgend auf der inneren Oberfläche des zweiten Substrats (12) in der Zeilenrichtung angeordnet sind und sich in der Spaltenrichtung erstrecken umfaßt, während die Leiterlagen Hⱼ₁ bis H_{jq} gegenüber den Anzeigenelektroden C₁ⱼ bis Cₘⱼ angeordnet sind;
**dadurch gekennzeichnet**, daß jedes nicht lineare Element Uᵢⱼ als ein Laminat Aᵢⱼ vorgesehen ist mit einer ersten Lage Qᵢⱼ, die auf einem Teil Dᵢⱼ der zugeordneten Zeilenelektrode Fᵢ angeordnet ist, wobei jede Lage Qᵢⱼ in der Zeilenrichtung angeordnet ist und im wesentlichen dieselbe Breite w wie die Zeilenelektrode Fᵢ aufweist, und mit einer zweiten Leiterlage Eᵢ, die auf der Lage Qᵢⱼ ausgebildet ist und im wesentlichen dieselbe Breite w wie die Lage Qᵢⱼ aufweist, wobei die Seitenflächen des Laminates Aᵢⱼ, die sich in der Zeilenrichtung erstrecken, mit Isoliermaterial Kᵢⱼ, Kᵢⱼ'; Kᵢ bedeckt sind und die zugeordnete Anzeigeelektrode Cᵢⱼ im wesentlichen eine Breite gleich der Länge des Laminates aufweist und sich in einer Spaltenrichtung über das Laminat Aᵢⱼ und auf das Isoliermaterial erstreckt.

2. Anzeige nach Anspruch 1, in der sich das auf dem Substrat gebildete Isoliermaterial Kᵢ zwischen aneinandergrenzenden Laminatgliedern Aᵢ₁ bis Aᵢₙ und im wesentlichen mit diesen fluchtend bzw. bündig erstreckt.

3. Anzeige nach Anspruch 1, in der das Isoliermatieral Kᵢⱼ, Kᵢⱼ' im wesentlichen nur die Seitenflächen des Laminates Aᵢⱼ bedeckt.

4. Verfahren zur Herstellung eines Flüssigkristallanzeigeschirms mit den Schritten:
(A) Präparieren eines ersten Substratgliedes durch:
(a) Bilden eines Laminatgliedes A aus einer Leiterlage F, einer Lage Q und einer Leiterlage E, die in dieser Reihenfolge laminiert werden, und zwar auf einem ersten Substrat;
(b) Pattern bzw. Rastern des Laminatgliedes A in eine erste Vielzahl von m streifenähnlichen Laminatgliedern A₁ bis Aₘ, die aufeinanderfolgend in der Spaltenrichtung angeordnet werden und sich in der Zeilenrichtung erstrecken;
(c) Ablagern bzw. Abscheiden einer Isolierlage K über den gesamten Bereich des ersten Substrats, um die Laminatglieder A₁ bis Aₘ abzudecken;
(d) selektives Wegätzen der Isolierlage K, um Isolierlagen Kᵢ (und Kᵢ') auf beiden Seiten des Laminatgliedes Aᵢ (mit i = 1, 2 ... m) zu formen, die die Breite der Laminatglieder Aᵢ begrenzen;
(e) Formen einer Leiterlage C über den gesamten Bereich des ersten Substrates, um die Laminatglieder A₁ bis Aₘ und die Isolierlagen K₁ bis Kₘ (und K₁' bis Kₘ') abzudecken, und
(f) Pattern bzw. Rastern der Leiterlage C, der zweiten Leiterlagen E₁ bis Eₘ und der Lagen Q₁ bis Qₘ, um Displayelektroden Cᵢ₁ bis Cᵢₙ zu formen, die sich über das Laminatglied Aᵢ und auf die Isolierlage Kᵢ erstrecken, und um aus jedem Laminatglied Aᵢ eine Vielzahl von n getrennten Laminatgliedern Aᵢⱼ (für j = 1 bis n) zu formen, von denen sich jedes aus einer Leiterlage Eᵢⱼ, einer Lage Qᵢⱼ und einem unter der Lage Qᵢⱼ liegenden Teil Dᵢⱼ der Zeilenelektrode Fᵢ zusammensetzt,
(B) Präparieren eines zweiten Substratgliedes durch Formen einer Vielzahl von n x q, mit q als einer ganzen Zahl gleich oder größer 1, Leiterlagen H₁₁, H₁₂ ... H_{1q}; H₂₁, H₂₂ ... K_{2q}; ... und Hₙ₁, Hₙ₂ ...H_{nq}, die in der Zeilenrichtung angeordnet sind und sich in der Spaltenrichtung erstrecken, und zwar auf einem zweiten Substrat mit einer isolierenden Oberfläche, wobei die Leiterlagen Hⱼ₁, Hⱼ₂, ... und H_{iq} den Displayelektroden C₁ⱼ, C₂ⱼ, ... und Cₘⱼ des ersten Substratgliedes entsprechen,
(C) Umdrehen des zweiten Substratgliedes mit der Oberseite nach unten und Anordnen des ersten und zweiten Substratgliedes in gegenüberliegender und im wesentlichen paralleler Beziehung zueinander und
(D) Füllen von Flüssigkristall in den Spalt, der durch das erste und zweite Substratglied umgrenzt wird.

5. Verfahren nach Anspruch 4, bei welchem der Schritt (d) Wegätzen der Isolierlage K, wobei Teile der Isolierlage belassen werden, die sich im wesentlichen nur entlang Seitenflächen der Laminatglieder und nicht im wesentlichen entlang dem Substrat erstrecken, und der Schritt (f) Pattern bzw. Rastern der Leiterlage C umfaßt, um Displayelektroden Cᵢ₁ bis Cᵢₙ zu bilden, die sich von dem Substrat auf die Isolierlage Kᵢ und das Laminatglied Aᵢ erstrecken und auf der Seitenfläche der Isolierlage Kᵢ verlaufen.

6. Verfahren nach Anspruch 4, bei welchem der Schritt (d) Wegätzen der Isolierlage K umfaßt, um eine Isolierlage Kᵢ zu formen, die sich zwischen aneinandergrenzenden Laminatgliedern A₁ bis Aₘ und im wesentlichen mit diesen fluchtend bzw. bündig erstreckt.

## Revendications

1. Affichage d'éléments d'image (pixels) à cristaux liquides comportant: un premier et un deuxième élément formant substrat (7, 11) placés en opposition à une distance prédéterminée, essentiellement en parallèle l'un par rapport à l'autre, et un cristal liquide (13) remplissant l'espace entre les premier et deuxième éléments formant substrat;
le premier élément formant substrat (7) comprenant un premier substrat (1), m électrodes de ligne semblables à des raies F₁, F₂... Fₘ, agencées sur la surface intérieure dudit premier substrat, chaque électrode de ligne ayant une largeur w, et n électrodes d'affichage Cᵢⱼ, où j = 1, 2...n, couplées à chaque électrode de ligne Fᵢ, où i = 1, 2...m, à travers un élément Uᵢⱼ respectif non linéaire, ayant une caractéristique de diode;
le deuxième élément formant substrat (11), comprenant un deuxième substrat (12) et un groupe de n x q, où q est un nombre entier égal ou supérieur à 1, couches conductrices semblables à des raies H₁₁, H₁₂, H_{1q}; H₂₁ ... H₂₂ ... H_{2q}; ... et Hₙ₁, Hₙ₂ ... H_{nq}, agencées d'une manière séquentielle sur la surface intérieure dudit deuxième substrat (12) dans la direction de ligne et s'étendant dans la direction de colonne, les couches conductrices Hⱼ₁ à H_{jq} étant opposées aux électrodes d'affichage C₁ⱼ à Cₘⱼ;
caractérisé en ce que chaque élément Uᵢⱼ non linéaire est un revêtement laminé Aᵢⱼ d'une première couche Qᵢⱼ, agencée sur une partie Dᵢⱼ de l'électrode Fᵢ de ligne respective, chaque couche Qᵢⱼ étant agencée dans la direction de ligne et ayant essentiellement la même largeur w que l'électrode Fᵢ de ligne, et d'une seconde couche Eᵢ conductrice formée sur la couche Qᵢⱼ et ayant essentiellement la même largeur w que la couche Qᵢⱼ, les deux faces latérales du revêtement laminé Aᵢⱼ s'étendant dans la direction de ligne, étant recouvertes d'un matériau isolant (Kᵢⱼ, K_{ij'}; Kᵢ), et l'électrode Cᵢⱼ d'affichage respective a essentiellement la même largeur que la longueur du revêtement laminé et s'étend dans la direction de colonne sur le revêtement laminé Aᵢⱼ et sur le matériau isolant.

2. Affichage selon la revendication 1, dans lequel le matériau isolant Kᵢ formé sur le substrat s'étend entre les éléments formant revêtement laminé Aᵢ₁ à Aᵢₙ, situés côte à côte et est essentiellement à leur niveau.

3. Affichage selon la revendication 1, dans lequel le matériau isolant Kᵢⱼ, K_{ij'} ne recouvre essentiellement que les faces latérales du revêtement laminé Aᵢⱼ.

4. Procédé de fabrication d'un panneau d'affichage à cristaux liquides comportant:
(A) une étape de préparation d'un premier élément formant substrat qui comprend les étapes de:
(a) formation, sur un premier substrat, d'un élément formant revêtement laminé A composé d'une couche conductrice F, d'une couche Q et d'une couche conductrice E laminées dans cet ordre;
(b) modelage de l'élément formant revêtement laminé A dans un premier groupe de m éléments formant revêtement laminé A₁ à Aₘ analogues à des raies, agencés d'une manière séquentielle dans la direction de colonne et s'étendant dans la direction de ligne;
(c) dépôt d'une couche K isolante sur toute la surface du premier substrat pour recouvrir les éléments formant revêtement laminé A₁ à Aₘ;
(d) attaque sélective de la couche isolante K pour former des couches isolantes Kᵢ (et Kᵢ') des deux côtés de l'élément formant revêtement laminé Aᵢ (où i = 1, 2... m) définissant la largeur des éléments formant revêtement laminé Aᵢ;
(e) formation d'une couche conductrice C sur toute la surface du premier substrat pour recouvrir les éléments formant revêtement laminé A₁ à Aₘ et les couches isolantes K₁ à Kₘ (et K₁' à Kₘ'); et
(f) modelage de la couche conductrice C, des deuxièmes couches conductrices E₁ à Eₘ et des couches Q₁ à Qₘ pour former des électrodes d'affichage Cᵢ₁ à Cᵢₙ s'étendant sur l'élément formant revêtement laminé Aᵢ et sur la couche isolante Kᵢ et pour former à partir de chaque élément formant revêtement laminé Aᵢ, un groupe de n éléments formant revêtement laminé séparés Aᵢⱼ (pour j = 1 à n), chacun étant composé d'une couche conductrice Eᵢⱼ, d'une couche Qᵢⱼ et d'une partie Dᵢⱼ de l'électrode de ligne Fᵢ sous-jacente à la couche Qᵢⱼ
(B) une étape de préparation d'un deuxième élément formant substrat, qui comprend les étapes de:
formation, sur un deuxième substrat ayant une surface isolante, d'un groupe de n x q, où q est un nombre entier égal ou supérieur à 1, couches conductrices H₁₁, H₁₂, ... H_{1q}; H₂₁, H₂₂ ... H_{2q}; ... et Hₙ₁, Hₙ₂ ... H_{nq} agencées d'une manière séquentielle dans la direction de ligne et s'étendant dans la direction de colonne, les couches conductrices Hj1, H_{J2}, ... et H_{iq} correspondant aux électrodes d'affichage C₁ⱼ , C₂ⱼ , ... et Cₘⱼ du premier élément formant substrat;
(C) une étape pour renverser de haut en bas le deuxième élément formant substrat et pour placer les premier et deuxième éléments formant substrat en opposition et essentiellement en parallèle l'un par rapport à l'autre et
(D) une étape de remplissage du cristal liquide dans l'espace défini par les premier et deuxième éléments formant substrat.

5. Procédé selon la revendication 4, dans lequel l'étape (d) comporte l'attaque de la couche K isolante laissant des parties de ladite couche isolante ne s'étendre essentiellement que le long des surfaces latérales des éléments formant revêtement laminé et non pas le long du substrat, et dans lequel l'étape (f) comprend le modelage de la couche conductrice C pour former des électrodes d'affichage Cᵢ₁ à Cᵢₙ s'étendant du substrat sur la couche isolante Kᵢ et sur l'élément formant revêtement laminé Aᵢ et passant sur la face latérale de la couche isolante Ki.

6. Procédé selon la revendication 4, dans lequel l'étape (d) comporte l'attaque de la couche K isolante pour former une couche isolante Kᵢ s'étendant entre les éléments formant revêtement laminé A₁ à Aₘ situés côte à côte et étant essentiellement à leur niveau.
